# EUROPÄISCHE PATENTSCHRIFT

(11) **EP 2 859 277 B1**
(45) Veröffentlichungstag und Bekanntmachung des Hinweises auf die Patenterteilung: **02.11.2016**
(21) Anmeldenummer: 13736753.8
(22) Anmeldetag: 07.06.2013
(51) Int. Cl.: F24F 5/00, F24F 11/00, F25B 25/00, F25B 13/00, F24F 3/06

(54) **KLIMAANLAGE**
AIR CONDITIONING INSTALLATION
INSTALLATION DE CLIMATISATION

(30) Priorität: 08.06.2012 DE 102012011519
(43) Veröffentlichungstag der Anmeldung: 15.04.2015
(73) Patentinhaber: GYack S.A.S., 83270 St. Cyr sur Mer (FR)
(72) Erfinder: GERTIS, Basil, F-83740 La Cadière d'Azur (FR)
(74) Vertreter: Lieck, Hans-Peter
(86) Internationale Anmeldenummer: PCT/EP2013/001684
(87) Internationale Veröffentlichungsnummer: WO 2013/182320

(56) Entgegenhaltungen:
- EP-A1- 2 278 237
- JP-A- H05 280 818
- JP-A- S55 102 842
- JP-A- 2001 289 465
- JP-A- 2006 029 744
- US-A1- 2006 070 719

## Beschreibung

Die vorliegende Erfindung ist auf eine Klimaanlage zum Klimatisieren von Räumen eines Gebäudes, eines Schiffs oder eines anderen Fahrzeugs bezogen.

Die Klimatisierung von Hotelzimmern oder Büroräumen war früher nur in luxuriösen Hotels und bei repräsentativen und hochwertigen Bürogebäuden üblich. Zunehmend wird eine Klimatisierung auch in Hotels und Bürogebäuden niedrigerer Kategorien erwartet. Aus diesen und anderen Gründen sind immer kleinere Räume zu klimatisieren. Gleichzeitig sind Gebäude immer besser isoliert, und durch Außenverschattung und andere Maßnahmen wird die Aufheizung durch Sonneneinstrahlung verringert.

Eine Folge ist, dass die für einen einzelnen Raum erforderliche Kühlleistung typischerweise nicht mehr 2000 W, sondern nur noch 500 W bis 600 W beträgt. Eine Indoor Unit bzw. Innenraumeinheit weist hingegen typischerweise eine Leistung von 2000 W auf.

Ein weiteres Problem besteht darin, dass die Kühlleistung einer herkömmlichen Klimaanlage nur innerhalb vorbestimmter Grenzen variiert werden kann. Typischerweise kann durch eine Outdoor Unit bzw. Außeneinheit, die für einen variablen Kältemittel-Volumenstrom (engl.: variable refrigerant flow) ausgebildet ist, eine Kühlleistung zwischen ca. 120 % und ca. 30 % ihrer Nominalleistung bereitgestellt werden. Eine noch geringere Kühlleistung bei einer noch geringeren Drehzahl des Kompressors ist in der Regel nicht möglich, weil das Kältemittel dann seine den Kompressor schmierenden Eigenschaften verliert.

Wenn die von den Innenraumeinheiten abgenommene Kühlleistung unter den Mindestwert der von der Außeneinheit bereitgestellten Kühlleistung absinkt, können im Kältemittelkreislauf ein zu hoher Druck und/oder eine zu hohe Temperatur entstehen. Dadurch kann die Klimaanlage beschädigt oder zerstört werden. Um dies zu vermeiden, wird, wenn die von den Innenraumeinheiten abgenommene Kühlleistung den Minimalwert unterschreitet, die Außeneinheit getaktet betrieben bzw. im Abstand weniger Minuten an- und ausgeschaltet. Dies kann eine korrespondierende zeitliche Variation der Raumtemperatur und einen entsprechenden Komfortverlust bewirken.

Die Wahl kleinerer Außeneinheiten stellt aus mehreren Gründen in der Regel keine Lösung dar. Bei abnehmender Nennleistung einer Außeneinheit nimmt typischerweise das Verhältnis zwischen der Mindestleistung und der Nennleistung zu, so dass die Mindestleistung nicht oder nur in geringem Maße sinkt.

Ferner existieren bei Klimaanlagen mit variablem Kältemittelfluss technisch bedingte Beschränkungen hinsichtlich der Anzahl der Innenraumeinheiten und hinsichtlich der Leistung der einzelnen Innenraumeinheit.

In JP 55-102842 A ist eine Klimaanlage mit einer Außeneinheit 11 außerhalb eines Gebäudes beschrieben. Die Außeneinheit 11 umfasst einen Kompressor 111, einen Wärmeübertrager 112 und eine Drossel 114. Eine Inneneinheit 12 ist über Rohrleitungen 120 mit der Außeneinheit 11 verbunden. In dieser wird Kühlleistung auf einen Wasserkreislauf übertragen und überschüssige Kühlleistung mittels eines Gebläses 124 abgeführt.

Eine weitere Klimaanlage gemäß dem Oberbegriff des Anspruchs 1 ist aus Patentdokument US-A-2006/070719 bekannt.

Eine Aufgabe der vorliegenden Erfindung besteht darin, eine verbesserte Klimaanlage zum Klimatisieren von Räumen zu schaffen, die insbesondere zur Erzeugung einer geringen Kühlleistung geeignet ist.

Diese Aufgabe wird durch die Gegenstände der unabhängigen Ansprüche gelöst.

Weiterbildungen sind in den abhängigen Ansprüchen angegeben.

Ausführungsformen der vorliegenden Erfindung beruhen auf der Idee, bei einer Klimaanlage mehrere Inneneinheiten mit jeweils einer eigenen Drossel auszustatten und mittels je eines Wärmeübertragers bzw. Wärmetauschers die Kühlleistung nicht unmittelbar vom Kältemittel an Raumluft zu übertragen, sondern an ein Wärmeträgerfluid, beispielsweise Wasser oder Sole. Mittels mehrerer weiterer Wärmeübertrager wird die Kühlleistung vom Wärmeträgerfluid an die Raumluft eines bzw. mehrerer Räume übertragen.

Eine Klimaanlage zum Klimatisieren von Räumen umfasst einen Kompressor zum Komprimieren eines Kältemittels in einem Kältemittelkreislauf, einen ersten Wärmeübertrager zum Austausch von Wärme zwischen dem Kältemittel und einem Wärmereservoir, mehrere Drosseln zum Expandieren des Kältemittels, mehrere zweite Wärmeübertrager zum Austausch von Wärme zwischen dem Kältemittel und einem Wärmeträgerfluid in je einem zugeordneten Wärmeträgerfluidkreislauf und mehrere dritte Wärmeübertrager, die in jeweils einem zugeordneten Raum angeordnet sind, zum Austausch von Wärme zwischen dem Wärmeträgerfluid und Raumluft des zugeordneten Raums, wobei einem zweiten Wärmeübertrager eine Drossel und ein Wärmeträgerfluidkreislauf mit mehreren dritten Wärmeübertragern zugeordnet sind. Die Klimaanlage ist insbesondere zum Klimatisieren bzw. Kühlen und/oder Heizen von Räumen bzw. Zimmern eines oder mehrerer Gebäude oder eines Schiffs oder eines anderen Fahrzeugs vorgesehen und ausgebildet.

Der erste Wärmeübertrager bzw. Wärmeaustauscher bzw. Wärmetauscher ist insbesondere in unmittelbarer räumlicher Nähe zum Kompressor und insbesondere zusammen mit dem Kompressor in einer Außeneinheit angeordnet, die außerhalb des Gebäudes oder an einer Außengrenze des Gebäudes oder des Schiffs oder des anderen Fahrzeugs angeordnet ist. Der erste Wärmeübertrager ist insbesondere zum Austausch von Wärme zwischen dem Kältemittel und Umgebungsluft bzw. einer das Gebäude, das Schiff oder das andere Fahrzeug umgebenden Atmosphäre oder zum Austausch von Wärme zwischen dem Kältemittel und Grundwasser oder einem Untergrund des Gebäudes oder Wasser, in dem das Schiff schwimmt, vorgesehen und ausgebildet.

Die Klimaanlage kann mehrere zweite Wärmeübertrager, denen jeweils eine Drossel und ein eigener Wärmeträgerfluidkreislauf mit mehreren dritten Wärmeübertragern zugeordnet ist. Jeder Wärmeträgerfluidkreislauf kann einen oder mehrere dritte Wärmeübertrager umfassen. Einem Raum können jeweils ein oder mehrere Wärmeübertrager aus demselben oder aus verschiedenen Wärmeträgerfluidkreisläufen zugeordnet sein.

Die Klimaanlage kann weitere Wärmeübertrager zum unmittelbaren Austausch von Wärme zwischen dem Kältemittel und Raumluft aufweisen, beispielsweise zur Klimatisierung von Sälen, Hallen oder anderen großen Räumen.

Eine Drossel ist jeweils insbesondere so angeordnet, dass ihr Abstand zum zugeordneten zweiten Wärmeübertrager geringer oder viel geringer ist als ihr Abstand zum ersten Wärmeübertrager. Mit einem Abstand ist dabei jeweils die Länge der die Drossel mit dem zweiten Wärmeübertrager bzw. mit dem ersten Wärmeübertrager verbindenden Fluidleitung gemeint. Insbesondere ist eine Drossel jeweils unmittelbar benachbart zum zugeordneten zweiten Wärmeübertrager und im Vorlauf des zugeordneten Wärmeübertragers bzw. bezogen auf die Fließrichtung des Kältemittels stromaufwärts des zugeordneten zweiten Wärmeübertragers angeordnet.

Die Zwischenschaltung des Wärmeträgerfluidkreislaufs zwischen dem Kältemittelkreislauf und die Raumluft kann eine Dimensionierung der in einzelnen Räumen bereitzustellenden Kühl- und/oder Heizleistung innerhalb deutlich weiterer Grenzen ermöglichen. Insbesondere können kleine Kühlleistungen von nur wenigen 100 W bereitgestellt werden, die in kleinen und gut thermisch isolierten Räumen moderner Hotels oder Bürogebäude ausreichend sind. Eine derart reduzierte Kühlleistung kann eine deutliche Reduktion der im klimatisierten Raum entstehenden Luftbewegung, die manchmal als unangenehme Zugluft wahrgenommen wird, bewirken.

Kältemittel sind oft geruch- und farblos. Wenn ein Kältemittel aus einer Klimaanlage austritt, kann es die Atemluft in einem Raum verdrängen und zum Ersticken von Personen in dem Raum führen. Diese Gefahr kann deutlich reduziert werden, wenn nicht mehr der Kältemittelkreislauf, sondern nur noch der Wärmeträgerfluidkreislauf mit Wasser, Sole oder einem anderen ungiftigen und bei Normalbedingungen flüssigen Wärmeträgerfluid bis in das einzelne Hotelzimmer oder in den einzelnen Büroraum geführt ist. Dies kann die Einhaltung von Vorschriften der EN 378 über maximale Kältemittel-Konzentrationen in Innenräumen vereinfachen.

Indem lediglich ein Teil des Wärmeträgerfluidkreislaufs im Hotelzimmer oder im Büroraum angeordnet, der Kältemittelkreislauf jedoch vollständig außerhalb des Hotelzimmers oder Büroraums angeordnet ist, kann auch das Geräuschniveau deutlich gesenkt werden. Beispielsweise kann das Geräusch des Schaltens eines Ventils im Hotelzimmer bzw. im Büroraum völlig vermieden werden. Der Anmelder erwartet eine Reduktion des Geräuschniveaus von typischerweise mindestens 30 dB(A) auf deutlich kleinere Werte bis herab zu ca. 21 dB(A).

Der Wärmeträgerfluidkreislauf weist eine eigene Wärmekapazität bzw. eine eigene thermische Trägheit auf, die insbesondere aus der Wärmekapazität des Wärmeträgerfluids, der Rohrleitungen und anderer Teile des Wärmeträgerfluidkreislaufs resultiert. Diese thermische Trägheit des Wärmeträgerfluidkreislaufs kann die bei einem getakteten Betrieb der Außeneinheit resultierende zeitliche Variation der Kühl- und/oder Heizleistung in einem Hotelzimmer oder einem Büroraum deutlich mindern.

Bei einer Klimaanlage mit den dargestellten Merkmalen kann die Anzahl der klimatisierten Räume ein Vielfaches der Anzahl der zweiten Wärmeübertrager und der Anzahl der Drosseln betragen. Im Falle einer technisch bedingten Beschränkung der Anzahl der Drosseln und der zweiten Wärmeübertrager, die zusammen mit einem Kompressor und einem ersten Wärmeübertrager den Kältemittelkreislauf bilden, kann folglich bei der hier beschriebenen Klimaanlage eine wesentlich höherer Anzahl von Räumen klimatisiert werden. Umgekehrt kann bei einem großen Gebäude die Anzahl der (insbesondere jeweils in einer Außeneinheit zusammengefassten) Kompressoren und Wärmeübertrager deutlich reduziert werden. Beides kann die Kosten für Erstellung, Betrieb und Unterhalt der Klimaanlage deutlich senken.

Bei einer Klimaanlage, wie sie hier beschrieben ist, sind insbesondere der Kompressor und der erste Wärmeübertrager in einer Außeneinheit außerhalb eines Gebäudes oder eines Fahrzeugs oder an einer Außengrenze eines Gebäudes oder eines Fahrzeugs angeordnet und je eine Drossel und ein zugeordneter Wärmeübertrager in einer Inneneinheit angeordnet.

Die Inneneinheit ist insbesondere innerhalb des Gebäudes oder des Schiffs oder des anderen Fahrzeugs angeordnet, beispielsweise in einem Flur oder Gang oder in einem Treppenhaus. Die Inneneinheit ist dann über Rohrleitungen mit den dritten Wärmeübertragern in einzelnen Räumen verbunden. Als dritte Wärmeübertrager sind insbesondere im englischsprachigen Raum als fan coils bekannte Komponenten sogenannter Chiller-Anlagen verwendbar, die kostengünstig und in Vielfalt angebolen werden.

Eine Klimaanlage, wie sie hier beschrieben ist, umfasst insbesondere ferner ein Reservoir für das Wärmeträgerfluid, zum Erhöhen der Wärmekapazität.

Das Reservoir wird insbesondere durch einen Tank gebildet, der in der Nähe des zugeordneten zweiten Wärmeübertragers angeordnet ist. Bereits mit einem geringen Volumen von beispielsweise 10 Litern kann das Reservoir die Wärmekapazität des Wärmeträgerfluidkreislaufs deutlich erhöhen. Dadurch kann im Falle eines getakteten Betriebs des Kompressors eine Variation der Kühlleistung im einzelnen Raum unter die Wahrnehmbarkeitsgrenze gesenkt werden.

Eine Klimaanlage, wie sie hier beschrieben ist, umfasst insbesondere ferner einen Temperatursensor im Wärmeträgerfluidkreislauf.

Der Temperatursensor ist insbesondere angeordnet und ausgebildet, um die Temperatur des Wärmeträgerfluids im Vorlauf des zweiten Wärmeübertragers zu erfassen. Ferner können weitere Sensoren zum Erfassen der Temperatur, des Drucks, der Fließgeschwindigkeit, des Massenflusses oder anderer Messgrößen im Vorlauf des zweiten Wärmeübertragers oder an einer anderen Stelle in einem Wärmeträgerfluidkreislauf vorgesehen sein. Der Temperatursensor und gegebenenfalls weitere Sensoren zum Erfassen von Messwerten können eine besonders feinfühlige Steuerung der Klimaanlage unterstützen.

Bei einer Klimaanlage, wie sie hier beschrieben ist, ist insbesondere kein Wärmeübertrager zur Abfuhr von Kühl- oder Heizleistung des Kältemittels an ein anderes Medium als das Wärmeträgerfluid vorgesehen.

Auch dadurch unterscheidet sich die Klimaanlage insbesondere von der eingangs erwähnten, in JP 55-102842 A dargestellten Klimaanlage, bei der überschüssige Kühl- oder Heizleistung abgeführt wird. Die hier beschriebene Klimaanlage ermöglicht damit einen besonders guten Wirkungsgrad bzw. eine besonders gute Leistungsziffer.

Bei einer Klimaanlage, wie sie hier beschrieben ist, ist insbesondere eine Drossel steuerbar.

Die steuerbare Drossel oder die steuerbaren Drosseln umfassen jeweils insbesondere ein elektronisches Expansionsventil. Die Steuerbarkeit einer Drossel ermöglicht jeweils die Steuerung der Kälteleistung am zugeordneten zweiten Wärmeübertrager und damit eine Anpassung an unterschiedliche Werts der an den zugeordneten dritten Wärmeübertragern abgenommenen Kühlleistung. Dadurch können die Steuerung der Klimaanlage insgesamt verfeinert und der Wirkungsgrad bzw. die Leistungsziffer erhöht werden.

Bei einer Klimaanlage, wie sie hier beschrieben ist, ist eine Inneneinheit mittels dreier Fluidleitungen mit der Außeneinheit verbunden und ausgebildet, um in einem Kühlbetriebsmodus dem Wärmeträgerfluid Wärme zu entziehen und in einem Heizbetriebsmodus dem Wärmeträgerfluid Wärme zuzuführen.

Mehrere oder alle Inneneinheiten der Klimaanlage können mittels dreier Fluidleitungen mit der Außeneinheit verbunden und ausgebildet sein, um unabhängig voneinander jeweils in einem Kühlbetriebsmodus dem Wärmeträgerfluid Wärme zu entziehen und in einem Heizbetriebsmodus dem Wärmeträgerfluid Wärme zuzuführen. Ein Umschalten zwischen dem Kühlbetriebsmodus und dem Heizbetriebsmodus erfolgt insbesondere durch Steuern einer steuerbaren Drossel und durch Auswahl von einem von zwei möglichen Rückläufen mittels eines oder mehrerer Ventile. Das oder die Ventile zur Auswahl von einem von zwei Rückläufen können unmittelbar in der Inneneinheit oder in einer zugeordnete, aber separaten Einheit, die mit der Inneneinheit über eine (insbesondere kurze) Fluidleitung verbunden ist, angeordnet sein.

Insbesondere auch in diesem Aspekt unterscheidet sich eine Klimaanlage mit den hier beschriebenen Eigenschaften und Merkmalen deutlich von der Lehre der eingangs erwähnten JP 55-102842 A, bei der ein Umschalten zwischen einem Kühlbetriebsmodus und einem Heizbetriebsmodus nicht möglich ist.

Eine Klimaanlage, wie sie hier beschrieben ist, ist insbesondere für einen variablen Kältemittel-Volumenstrom ausgebildet.

Durch einen variablen bzw. steuerbaren bzw. variierbaren Kältemittel-Volumenstrom ist eine Einstellung der von der Klimaanlage insgesamt bereitgestellten Kühl- oder Heizleistung innerhalb eines weiten Bereichs möglich.

Bei einer Klimaanlage, wie sie hier beschrieben ist, ist zum Antrieb des Kompressors insbesondere ein Drehstrommotor mit einstellbarer Drehzahl vorgesehen.

Zum Einstellen der Drehzahl des Drehsynchron- oder Asynchron-Drehstrommotors ist insbesondere ein Wechselrichter vorgesehen, der ausgebildet ist, Mehrphasen-Strom einstellbarer Frequenz und einstellbarer Amplitude der Spannung und/oder des Stroms bereitzustellen. Dies ernöglicht eine Variation des Kältemittel-Volumenstroms und der von der Klimaanlage bereitgestellten Kühl- und/oder Heizleistung.

Eine Klimaanlage, wie sie hier beschrieben ist, umfasst insbesondere ferner eine Steuereinrichtung zum Erfassen eines gesamten Kühl- oder Heiz-Leistungsbedarfs und zum Steuern des Kompressors zwischen einer vorbestimmten Mindestleistung und einer vorbestimmten Höchstleistung, wobei die Steuereinrichtung ausgebildet ist, um den Kompressor vorübergehend abzuschalten, wenn der gesamte Kühl- oder Heiz-Leistungsbedarf einen vorbestimmten Schwellenwert unterschreitet.

Die Steuereinrichtung weist insbesondere in einer separaten Steuereinheit und/oder in der Außeneinheit und/oder in einer oder mehreren Inneneinheiten jeweils einen oder mehrere Mikrocontroller oder andere elektrische oder elektronische analoge oder digitale Schaltungen zur Datenverarbeitung auf, die mittels elektrischer, optischer oder anderer Signalleitungen untereinander, mit Sensoren zum Erfassen von Temperaturen, Drücken, Volumenströmen und anderen Messwerten und mit einer oder mehreren Benutzerschnittstellen gekoppelt sind. Die Steuerungseinrichtung ist insbesondere auch zur Steuerung der Drosseln vorgesehen und ausgebilet.

Das vorübergehende Abschalten des Kompressors und damit der im Kältemittelkreislauf bereitgestellten Kühl- und/oder Heizleistung bewirkt bei einer Klimaanlage mit den hier beschriebenen Eigenschaften und Merkmalen in den klimatisierten Räumen eine Variation der Kühloder Heizleistung, die aufgrund der Wärmekapazität bzw. der Trägheit der Wärmeträgerfluidkreisläufe deutlich geringer ausfallen kann als bei einer herkömmlichen Klimaanlage. Nachfolgend werden verschiedene Ausführungsformen anhand der beigefügten Figuren näher erläutert. Es zeigen:
- Figur 1: eine schematische Darstellung eines Gebäudes mit einer Klimaanlage;
- Figur 2: eine schematische Darstellung einer Klimaanlage;
- Figur 3: eine schematische Darstellung einer weiteren Klimaanlage.

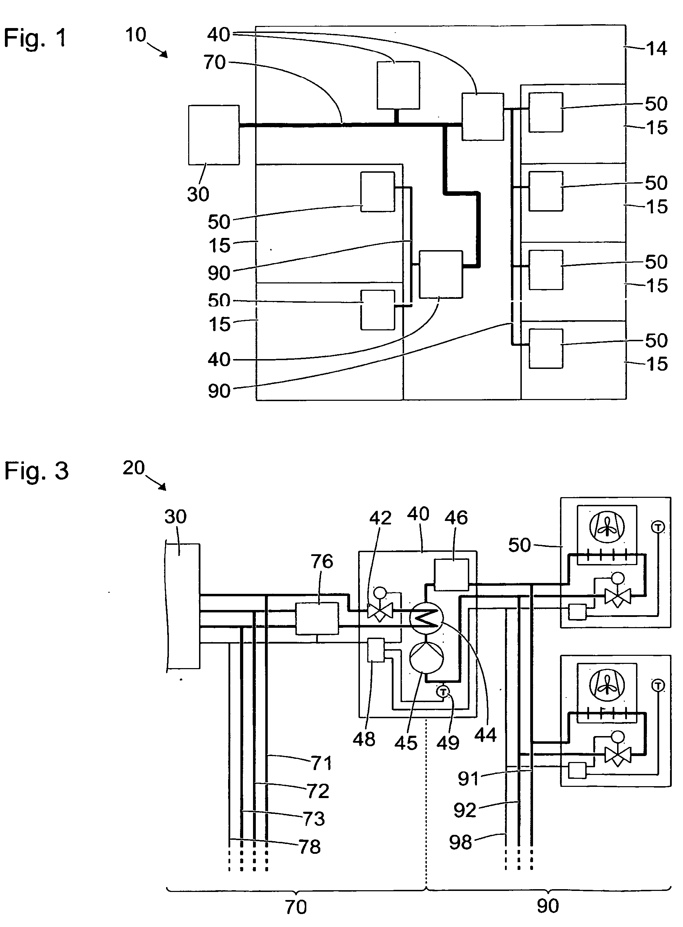

Figur 1 zeigt eine schematische Darstellung eines Gebäudes 10 mit einer Außenwand 12 und mehreren Räumen 14, 15 unterschiedlicher Größe. Die Darstellung in Figur 1 deutet insbesondere einen Grundriss eines Geschosses bzw. einer Etage des Gebäudes 10 an.

Das Gebäude 10 umfasst einen großen Raum 14, insbesondere einen Eingangsbereich, der in einen Flur bzw. einen Gang zwischen kleineren abgetrennten Räumen übergeht. Die Räume 15 weisen unterschiedliche Größen, insbesondere unterschiedliche Grundflächen und/oder Raumhöhen auf. Die Räume 15 können sich ferner in ihren Funktionen, in den Größen der angrenzenden Fassadenflächen, in der Qualität der Isolierung nach außen, in der Exponiertheit gegenüber Sonneneinstrahlung und in anderen Eigenschaften unterscheiden.

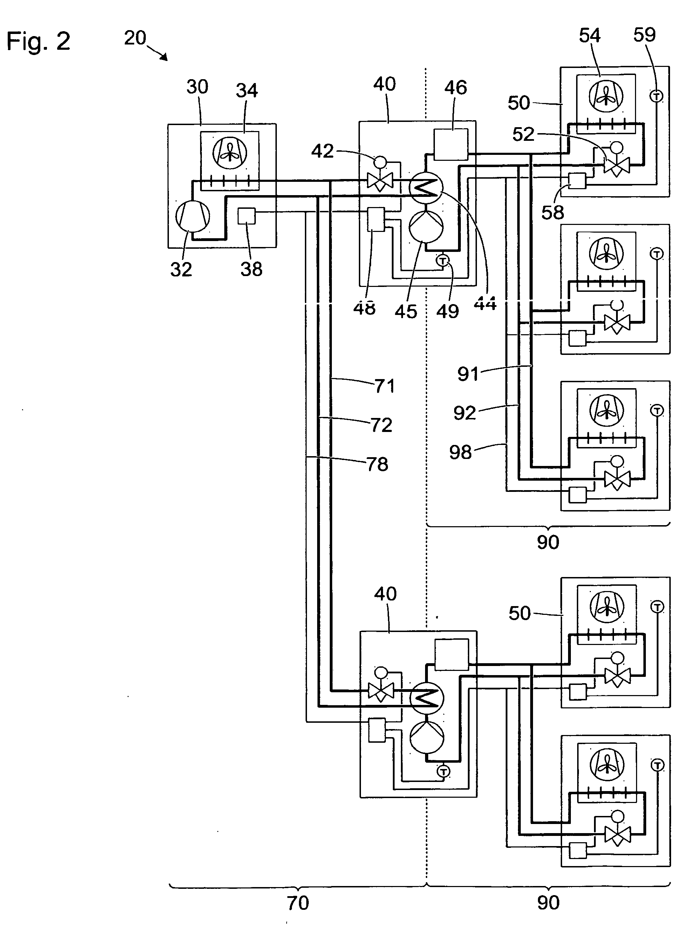

Das Gebäude 10 weist eine Klimaanlage auf, die in den unten beschriebenen Figuren 2 und 3 separat dargestellt und mit dem Bezugszeichen 20 versehen ist. Die Klimaanlage umfasst eine Außeneinheit 30, die an der Außenwand 12 des Gebäudes 10 befestigt oder nahe dem Gebäude 10 und von diesem beabstandet angeordnet sein kann. Ferner umfasst die Klimaanlage mehrere Inneneinheiten 40, die durch ein Rohrleitungssystem mit der Außeneinheit 30 verbunden sind. Anders ausgedrückt bilden die Außeneinheit 30 und die Inneneinheiten 40 zusammen mit diese verbindenden Rohrleitungen einen verzweigten Kältemittelkreislauf 70.

Eine Inneneinheit 40 bildet mit mehreren zugeordneten und in jeweils einem Raum 15 angeordneten Zimmereinheiten einen Wärmeträgerfluidkreislauf 90. Anders ausgedrückt bilden jeweils eine Inneneinheit 40 und mehrere zugeordnete Zimmereinheiten 50 zusammen mit diese verbindenden Rohrleitungen einen Wärmeträgerfluidkreislauf 90.

Bei dem dargestellten Beispiel bildet eine Inneneinheit 40 zusammen mit zwei zugeordneten Zimmereinheiten 50 in jeweils einem von zwei größeren, in Figur 1 links unten angeordneten Zimmern 15 einen Wärmeträgerfluidkreislauf 90. Eine weitere Inneneinheit 40 bildet zusammen mit vier Zimmereinheiten in jeweils einem von vier kleineren, in Figur 1 rechts angeordneten Zimmer 15 einen weiteren Wärmeträgerfluidkreislauf 90. Bei dem in Figur 1 dargestellten Beispiel ist ferner eine dritte Inneneinheit in dem großen Raum 14 angeordnet und zu dessen unmittelbarer Klimatisierung ohne Verwendung eines zugeordneten Wärmeträgerfluidkreislaufs vorgesehen.

Die Klimaanlage ist zur Klimatisierung der Räume bzw. Zimmer 14, 15 vorgesehen, insbesondere zur Kühlung und/oder Heizung der Raumluft in den Zimmern 14, 15. Die Außeneinheit 30 ist vorgesehen und ausgebildet; um in einem Kühlbetriebsmodus im Kältemittelkreislauf 70 Kühlleistung bereitzustellen bzw. einem Kältemittel im Kältemittelkreislauf 70 Wärme zu entziehen, und diese Wärme mittels eines Wärmeübertragers einer Umgebung des Gebäudes 10 (insbesondere auf einem höheren Temperaturniveau) zuzuführen. Alternativ oder zusätzlich ist die Außeneinheit 30 ausgebildet, um in einem Heizbetriebsmodus der Umgebung des Gebäudes 10 Wärme zu entziehen und diese Wärme (insbesondere auf einem höheren Temperaturniveau) im Kältemittelkreislauf 70 bzw. über den Kältemittelkreislauf 70 an den Inneneinheiten 40 bereitzustellen. Die Außeneinheit 30 und der Kältemittelkreislauf 70 können ausgebildet sein, um gleichzeitig Kühlleistung und Heizleistung bereitzustellen. Dabei befinden sich insbesondere ein Teil der Inneneinheiten 40 in einem Kühlbetriebsmodus und einen anderer Teil der Inneneinheiten 40 in einem Heizbetriebsmodus.

Jede Inneneinheit 40 ist ausgebildet, um in einem Kühlbetriebsmodus Wärme dem zugeordneten Wärmeträgerfluidkreislauf 90 oder dem großen Raum 14 zu entziehen und dem Kältemittelkreislauf 70 zuzuführen oder in einem Heizbetriebsmodus Wärme dem Kältemittelkreislauf 70 zu entziehen und dem zugeordneten Wärmeträgerfluidkreislauf 90 zuzuführen. Dazu umfasst jede Inneneinheit insbesondere einen Wärmeübertrager zum Übertragen von Wärme zwischen dem Kältemittelkreislauf 70 einerseits und dem zugeordneten Wärmeträgerfluidkreislauf 90 oder der Raumluft des großen Raums 14 andererseits.

Jede Zimmereinheit 50 ist vorgesehen und ausgebildet, um in einem Kühlbetriebsmodus Wärme der Raumluft des zugeordneten Raums 15 zu entziehen und dem zugeordneten Wärmeträgerfluidkreislauf 90 zuzuführen oder in einem Heizbetriebsmodus Wärme dem zugeordneten Wärmeträgerfluidkreislauf 90 zu entziehen und der Raumluft des zugeordneten Raums 15 zuzuführen. Dazu umfasst jede Zimmereinheit 50 insbesondere einen Wärmeübertrager zum Austausch von Wärme zwischen dem Wärmeträgerfluidkreislauf 90 und der Raumluft des zugeordneten Raums 15.

Die Klimaanlage kann statt in einem ortsfesten oder mobilen Gebäude 10 in einem Schiff oder einem anderen Fahrzeug angeordnet sein. Die Außeneinheit 30 kann statt zum Austausch von Wärme zwischen dem Kältemittelkreislauf 70 und Umgebungsluft zum Austausch von Wärme zwischen dem Kältemittelkreislauf 70 und Wasser, Grundwasser oder einem Untergrund des Gebäudes ausgebildet sein. Beispiele für die Ausgestaltung der Klimaanlage sind mit Bezug auf die Figuren 2 und 3 beschrieben.

Figur 2 zeigt eine schematische Darstellung einer Klimaanlage 20, die - ähnlich wie oben anhand der Figur 1 dargestellt - bei einem stationären oder mobilen Gebäude, einem Schiff oder einem anderen Fahrzeug verwendbar ist. Beispielhaft ist die Klimaanlage 20 mit einer Außeneinheit 30, einer ersten (in Figur 2 oben dargestellten) Inneneinheit 40, der drei Zimmereinheiten 50 zugeordnet sind, und einer zweiten (in Figur 2 unten dargestellten) Inneneinheit 40, der zwei Zimmereinheiten 50 zugeordnet sind, dargestellt. Die Anzahl der Inneneinheiten 40 und die Anzahl der jeder Inneneinheit 40 zugeordneten Zimmereinheiten kann von der Darstellung in Figur 2 deutlich abweichen.

Im Sinne der Übersichtlichkeit der Darstellung in Figur 2 sind jeweils nur eine Inneneinheit 40 und eine Zimmereinheit 50 mit mehreren Bezugszeichen versehen.

Die Außeneinheit 30 umfasst einen Kompressor 32, der insbesondere durch einen in Figur 2 nicht dargestellten Drehstrommotor mit einstellbarer Drehzahl angetrieben ist, um einen einstellbaren Kältemittelstrom zu erzeugen. Ferner umfasst die Außeneinheit 30 einen ersten Wärmeübertrager 34 zum Übertragen von Wärme zwischen einem Kältemittel und Umgebungsluft, Wasser oder einem anderen Medium. Der erste Wärmeübertrager 34 ist insbesondere mit einem Axialgebläse zum Umwälzen von Umgebungsluft versehen. Ferner umfasst die Außeneinheit 30 eine Steuerung 38 zum Steuern des Kompressors 32. Zusätzlich kann die Steuerung 38 ausgebildet sein, um Signale von in Figur 2 nicht dargestellten Sensoren zum Erfassen von Temperaturen, Drücken, Durchflussmengen oder anderen Messwerten zu empfangen und um einen oder mehrere Gebläse des ersten Wärmeübertragers 34, Ventile oder andere Aktoren zu steuern.

Jede Inneneinheit 40 umfasst ein steuerbares Drosselventil 42, insbesondere ein elektronisches Expansionsventil, einen zweiten Wärmeübertrager 44, eine Umwälzpumpe 45, ein Reservoir 46, eine Steuerung 48 und einen Temperatursensor 49. Die Drossel 42 und der zweite Wärmeübertrager der Inneneinheit 40 sind mittels Fluidleitungen 71, 72 mit dem Kompressor 32 und dem ersten Wärmeübertrager 34 der Außeneinheit 30 verbunden und bilden mit diesen einen Kältemittelkreislauf 70.

Die Steuerung 48 jeder Inneneinheit 40 ist mittels einer oder mehrerer Signalleitungen 78 zum Übertragen elektrischer, optischer und/oder anderer Signale mit der Steuerung 38 der Außeneinheit 30 verbunden. Die Signalleitung 78 ist insbesondere als Punkt-zu-Punkt-Verbindung oder als Bus, der gleichzeitig die Steuerungen 48 mehrerer oder aller Inneneinheiten 40 mit der Steuerung 38 der Außeneinheit 30 koppelt, ausgebildet.

Eine Zimmereinheit 50 umfasst jeweils ein Steuerventil 52, einen dritten Wärmeübertrager 54, eine Steuerung 58 und einen Temperatursensor 59. Das Steuerventil 52 und der dritte Wärmeübertrager 54 einer Zimmereinheit 50 sind jeweils mittels Wärmeträgerfluidleitungen 91, 92 mit dem zweiten Wärmeübertrager 44, der Umwälzpumpe 45 und dem Reservoir 46 der zugeordneten Inneneinheit 40 verbunden und bilden mit diesen einen Wärmeträgerfluidkreislauf 90.

Die Steuerung 58 jeder Zimmereinheit 50 ist mit dem Steuerventil 52 und dem Temperatursensor 59 der Zimmereinheit 50 und mittels einer oder mehrerer Signalleitungen 98 zum Übertragen elektrischer, optischer oder anderer Signale mit der Steuerung 48 der zugeordneten inneneinheit 40 gekoppeit. Die Signalleitung 98 ist insbesondere als Punkt-zu-Punkt-Verbindung oder als Bus zur Kopplung der Steuerung 48 einer Inneneinheit 40 mit den Steuerungen 58 mehrerer oder aller zugeordneter Zimmereinheiten 50 ausgebildet.

Abweichend von der Darstellung in Figur 2 können die Signalleitungen 78, 98 anders verlaufen als die in Figur 2 parallel dargestellten Kältemittelleitungen 71, 72 bzw. Wärmeträgerfluidleitungen 91, 92 und/oder eine andere Topologie aufweisen. Insbesondere können alle Steuerungen 38, 48, 58 der Außeneinheit 30, der Inneneinheiten 40 und der Zimmereinheiten 50 mittels eines einzigen unverzweigten oder verzweigten Busses oder mittels mehrerer und abweichend von der Darstellung in Figur 5 aufgeteilter Busse gekoppelt sein.

Die Steuerungen 38, 48, 58 bilden zusammen eine Steuereinrichtung zum Steuern der Klimaanlage 20, insbesondere des Kompressors 32, der Drosseln 42, der Umwälzpumpen 54 und der Steuerventile 52. Die Steuerungen 38, 48, 58 sind insbesondere ausgebildet, um die Klimaanlage 20 zu steuern in Abhängigkeit von Raumlufttemperaturen vor und/oder nach Austausch von Wärme mit jeweils einem dritten Wärmeübertrager 54, von Temperaturen im Kältemittelkreislauf 70 und in den Wärmeträgerfluidkreisläufen 90, von einer Außentemperatur oder einer Temperatur eines anderen Wärmereservoirs, mit dem der erste Wärmeübertrager 34 Wärme austauscht, von Sollwerten von Raumlufttemperaturen, die an Benutzerschnittstellen erfasst werden, und von anderen Parametern.

Wenn die Summe der an allen Zimmereinheiten 50 bereitgestellten Kühlleistungen einen durch Eigenschaften der Außeneinheit 30 vorgegebenen Mindestwert der durch die Außeneinheit 30 bereitzustellenden Leistung unterschreitet, kann der Kompressor 32 getaktet betrieben werden. Dabei wird der Kompressor 32 periodisch oder aperiodisch an- und ausgeschaltet. Die an den zweiten Wärmeübertragern 44 bereitgestellte Kühlleistung variiert zeitlich entsprechend. Aufgrund der Trägheit bzw. der Wärmekapazität der Wärmeträgerfluidkreisläufe 90, wirkt sich diese Variation der an den zweiten Wärmeübertragern 44 bereitgestellten Kühlleistung nicht oder nur schwach wahrnehmbar auf die von den Zimmereinheiten bereitgestellten Kühlleistungen aus. Die thermische Trägheit bzw. die Wärmekapazität der Wärmeträgerfluidkreisläufe 90 wird jeweils durch das Reservoir 46 erhöht.

Bei der schematischen Darstellung in Figur 2 sind alle Inneneinheiten 40 untereinander gleich und alle Zimmereinheiten 50 untereinander gleich. Abweichend von der Darstellung in Figur 2 können die Inneinheiten 40 sich voneinander unterscheiden, beispielsweise durch unterschiedlich dimensionierte Komponenten. Ferner können die Zimmereinheiten 50 sich voneinander unterscheiden, beispielsweise durch unterschiedlich dimensionierte Komponenten.

Figur 3 zeigt eine schematische Darstellung einer weiteren Klimaanlage 20, die in einigen Merkmalen und Eigenschaften der oben anhand der Figur 2 dargestellten Klimaanlage ähnelt. Im Unterschied zu Figur 2 ist nur ein Ausschnitt der gesamten Klimaanlage 20 dargestellt. Mögliche Fortsetzungen von Kältemittelleitungen 71, 72, 73, Wärmeträgerfluidleitungen 91, 92 und Signalleitungen 78, 98 über den dargestellten Bereich hinaus sind durch gestrichelte Linien angedeutet. Nachfolgend sind insbesondere Merkmale und Eigenschaften dargestellt, in denen sich die Klimaanlage aus Figur 3 von der oben anhand der Figur 2 dargestellten Klimaanlage unterscheidet.

Bei der in Figur 3 dargestellten Klimaanlage ist die Außeneinheit 30 mittels dreier Kältemittelleitungen 71, 72, 73 mit jeder Inneneinheit 40 verbunden. Insbesondere ist der Vorlauf der Drossel 42 jeder Inneneinheit 40 mittels einer ersten Kältemittelleitung 71 mit der Außeneinheit 30 verbunden. Der Rücklauf des Wärmeübertragers 44 jeder Inneneinheit 40 ist mittels zweier Kältemittelleitungen 72, 73 mit der Außeneinheit 30 verbunden.

Zwischen dem Rücklauf des zweiten Wärmeübertragers 44 einerseits und der zweiten und der dritten Kältemittelleitung 72, 73 andererseits ist jeweils eine Modusschalteinrichtung 76 angeordnet. Die Modusschalteinrichtung 76 kann in die Inneneinheit 40 integriert oder als separate, beabstandete und durch eine Fluidleitung mit der zugeordneten Inneneinheit 40 verbundene Einheit ausgebildet sein. Die Modusschalteinrichtung 76 umfasst jeweils insbesondere ein oder mehrere Ventile, mittels derer der Rücklauf des zweiten Wärmeübertragers 44 alternativ über die zweite Kältemittelleitung 72 mit dem Eingang eines Kompressors 32 der Außeneinheit 30 (vgl. Figur 2) oder über die dritte Kältemittelleitung 73 und eine Umwälzpumpe in der Außeneinheit 30 mit der ersten Kältemittelleitung 71 verbunden wird.

Die Modusschalteinrichtung 76 ist insbesondere über die Signalleitung 78 oder auf andere Weise mit der Steuerung 48 der zugeordneten Inneneinheit 40 und/oder mit anderen Komponenten 38, 48, 58 (vgl. Figur 2 der Steuereinrichtung) verbunden. Die Modusschalteinrichtung 76 erlaubt ein Umschalten zwischen einem Kühlbetriebsmodus und einem Heizbetriebsmodus. Wenn eine Inneneinheit 40 im Kühlbetriebsmodus arbeitet, wird Wärme vom zugeordneten Wärmeträgerfluidkreislauf 90 zum Kältemittelkreislauf 70 übertragen. Wenn eine Inneneinheit 40 im Heizbetriebsmodus arbeitet, wird Wärme vom Kältemittelkreislauf 70 zum zugeordneten Wärmeträgerfluidkreislauf 90 übertragen. Innerhalb der Klimaanlage 20 können gleichzeitig eine oder mehrere Inneneinheiten 40 sich im Kühlbetriebsmodus und eine oder mehrere andere Inneneinheiten 40 sich im Heizbetriebsmodus befinden.

### Bezugszeichenliste

- 10: Gebäude
- 12: Außenwand des Gebäudes 10
- 14: Raum im Gebäude 10
- 15: Raum im Gebäude 10
- 20: Klimaanlage
- 30: Außeneinheit der Klimaanlage 20
- 32: Kompressor der Außeneinheit 30
- 34: Wärmeübertrager der Außeneinheit 30
- 38: Steuerung der Außeneinheit 30
- 40: Inneneinheit der Klimaanlage 20
- 42: Drossel der Inneneinheit 40
- 44: Warmeübertrager der inneneinheit 40
- 45: Umwälzpumpe
- 46: Reservoir der Inneneinheit 40
- 48: Steuerung der Inneneinheit 40
- 49: Temperatursensor der Inneneinheit 40
- 50: Zimmereinheit der Klimaanlage 20
- 52: Steuerventil der Zimmereinheit 50
- 54: Wärmeübertrager der Zimmereinheit 50
- 58: Steuerung der Zimmereinheit 50
- 59: Temperatursensor der Zimmereinheit 50
- 70: Kältemittelkreislauf
- 71: Kältemittelleitung (Hochdruck) im Kältemittelkreislauf 70
- 72: Kältemittelleitung (Niederdruck) im Kältemittelkreislauf 70
- 73: Kältemittelleitung (Niederdruck) im Kältemittelkreislauf 70
- 76: Modusschalteinrichtung
- 78: Signalleitung zwischen Außeneinheit 30 und Inneneinheit 40
- 90: Wärmeträgerfluidkreislauf
- 91: Wärmeträgerleitung im Wärmeträgerfluidkreislauf 90
- 92: Wärmeträgerleitung im Wärmeträgerfluidkreislauf 90
- 98: Signalleitung zwischen Inneneinheit 40 und Zimmereinheit 50

## Patentansprüche

1. Klimaanlage (20) zum Klimatisieren von Räumen (14,15),
mit einem Kompressor (32) zum Komprimieren eines Kältemittels in einem Kältemittelkreislauf (70, 71, 72, 73),
wobei die Klimaanlage (20) für einen variablen Kältemittel-Volumenstrom ausgebildet ist;
mit einem ersten Wärmeübertrager (34) zum Austausch von Wärme zwischen dem Kältemittel und einem Wärmereservoir;
mit mehreren Drossels (42) zum Expandieren des Kältemittels;
mit mehreren zweiten Wärmeübertragern (44) zum Austausch von Wärme zwischen dem Kältemittel und einem Wärmeträgerfluid in je einem zugeordneten Wärmeträgerfluidkreislauf (90, 91, 92);
mit einem Reservoir (46) für das Wärmeträgerfluid, zum Erhöhen der Wärmekapazität, in jedem Wärmeträgerfluidkreislauf (90, 91, 92);
mit mehreren dritten Wärmeübertragem (54), die in jeweils einem zugeordneten Raum (15) angeordnet sind, zum Austausch von Wärme zwischen dem Wärmeträgerfluid und Raumluft des zugeordneten Raums (15);
wobei einem zweiten Wärmeübertrager (44) eine Drossel (42) und ein Wärmeträgerfluidkreislauf (90, 91, 92) mit mehreren dritten Wärmeübertragern (54) zugeordnet sind; und **gekennzeichnet durch** eine Steuereinrichtung (38, 48, 58, 78, 98) zum Erfassen eines gesamten Kühl- oder Heiz-Leistungsbedarfs und zum Steuern des Kompressors (32) zwischen einer vorbestimmten Mindestleistung und einer vorbestimmten Höchstleistung,
wobei die Steuereinrichtung (38, 48, 58, 78, 98) ausgebildet ist, um den Kompressor (32) vorübergehend abzuschalten, wenn der gesamte Kühl- oder Heiz-Leistungsbedarf einen vorbestimmten Schwellenwert unterschreitet.

2. Klimaanlage (20) nach dem vorangehenden Anspruch, bei welcher der Kompressor (32) und der erste Wärmeübertrager (34) in einer Außeneinheit (30) außerhalb eines Gebäudes (10) oder eines Fahrzeugs oder an einer Außengrenze (12) eines Gebäudes (10) oder eines Fahrzeugs und je eine Drossel (42) und ein zugeordneter zweiter Wärmeübertrager (44) in einer Inneneinheit (40) angeordnet sind.

3. Klimaanlage (20) nach einem der vorangehenden Ansprüche, ferner mit: einem Temperatursensor (49) im Wärmeträgerfluidkreislauf (91, 92).

4. Klimaanlage (20) nach einem der vorangehenden Ansprüche, bei der kein Wärmeübertrager zur Abfuhr von Kühl- oder Heizleistung des Kältemittels an ein anderes Medium als das Wärmeträgerfluid vorgesehen ist.

5. Klimaanlage (20) nach einem der vorangehenden Ansprüche, bei der eine Drossel (42) steuerbar ist.

6. Klimaanlage (20) nach dem vorangehenden Anspruch, bei der eine Inneneinheit (40) mittels dreier Fluidleitungen (71, 72, 73) mit der Außeneinheit (30) verbunden und ausgebildet ist, um in einem Kühlbetriebsmodus dem Wärmeträgerfluid Wärme zu entziehen und in einem Heizbetriebsmodus dem Wärmeträgerfluid Wärme zuzuführen.

7. Klimaanlage (20) nach einem der vorangehenden Ansprüche, wobei zum Antrieb des Kompressors (32) ein Drehstrommotor mit einstellbarer Drehzahl vorgesehen ist.

## Claims

1. An air conditioning system (20) for air conditioning rooms (14, 15),
with a compressor (32) for compressing a refrigerant in a refrigerant circuit (70, 71, 72, 73), wherein the air conditioning system (20) is formed for a variable refrigerant volume flow;
with a first heat exchanger (34) for exchanging heat between the refrigerant and a heat reservoir;
with a plurality of throttles (42) for expanding the refrigerant;
with a plurality of second heat exchangers (44) for exchanging heat between the refrigerant and a heat transfer fluid in one associated heat transfer fluid circuit (90, 91, 92) each;
with a reservoir (46) for the heat transfer fluid, to increase the thermal capacity, in each heat transfer fluid circuit (90, 91, 92);
with a plurality of third heat exchangers (54), which are arranged in one associated room (15) each, for exchanging heat between the heat transfer fluid and room air of the associated room (15);
wherein a throttle (42) and a heat transfer fluid circuit (90, 91, 92) with a plurality of third heat exchangers (43) are associated to a second heat exchanger (44);
and **characterized by** a control device (38, 48, 58, 78, 98) for detecting a total cooling or heating power demand and for controlling the compressor (32) between a predetermined minimum power and a predetermined maximum power,
wherein the control device (38, 48, 58, 78, 98) is formed to temporarily switch off the compressor (32) when the total cooling or heating power demand falls below a predetermined threshold value.

2. The air conditioning system (20) according to the preceding claim, in which the compressor (32) and the first heat exchanger (34) are arranged in an external unit (30) outside a building (10) or a vehicle or at an external boundary (12) of a building (10) or a vehicle and one throttle (42) each and an associated second heat exchanger (44) are arranged in an internal unit (40).

3. The air conditioning system (20) according to any of the preceding claims, furthermore comprising:
a temperature sensor (49) in the heat transfer fluid circuit (91, 92).

4. The air conditioning system (20) according to any of the preceding claims, in which no heat exchanger is provided for dissipating cooling or heating power of the refrigerant to a medium other than the heat transfer fluid.

5. The air conditioning system (20) according to any of the preceding claims, in which a throttle (42) is controllable.

6. The air conditioning system (20) according to the preceding claim, in which an internal unit (40) is connected with the external unit (30) by means of three fluid conduits (71, 72, 73) and is formed to withdraw heat from the heat transfer fluid in a cooling mode and supply heat to the heat transfer fluid in a heating mode.

7. The air conditioning system (20) according to any of the preceding claims, wherein for driving the compressor (32) a three-phase motor with adjustable speed is provided.

## Revendications

1. Installation de climatisation (20) pour la climatisation de locaux (14, 15),
comprenant un compresseur (32) pour comprimer un agent réfrigérant dans un circuit d'agent réfrigérant (70, 71, 72, 73),
ladite installation de climatisation (20) étant réalisée pour un flux volumétrique variable d'agent réfrigérant,
comprenant un premier moyen de transmission thermique (34) pour l'échange de chaleur entre l'agent réfrigérant et un réservoir de chaleur;
comprenant plusieurs étranglements (42) pour l'expansion de l'agent réfrigérant;
comprenant plusieurs seconds moyens de transmission thermique (44) pour l'échange de chaleur entre l'agent réfrigérant et un fluide caloporteur dans un circuit respectif d'agent caloporteur associé (90, 91, 92);
comprenant un réservoir (46) pour le fluide caloporteur, afin d'augmenter la capacité thermique, dans chaque circuit de fluide caloporteur (90, 91, 92);
comprenant plusieurs troisièmes moyens de transmission thermique (54), qui sont agencés respectivement dans un local associé (15), pour l'échange de chaleur entre le fluide caloporteur et l'air ambiant du local associé (15);
dans laquelle un étranglement (42) et un circuit de fluide caloporteur (90, 91, 92) comportant plusieurs troisièmes moyens de transmission thermique (54) sont associés à un second moyen de transmission thermique (44);
et **caractérisée par**
un système de commande (38, 48, 58, 78, 98) pour déterminer un besoin total en puissance de refroidissement ou de chauffage et pour commander le compresseur (32) entre une puissance minimum prédéterminée et puissance maximum prédéterminée,
dans lequel le système de commande (38, 48, 58, 78, 98) est réalisé pour arrêter temporairement le compresseur (32) quand le besoin total en puissance de refroidissement ou de chauffage passe au-dessous d'une valeur seuil prédéterminée.

2. Installation de climatisation (20) selon la revendication précédente, dans laquelle le compresseur (32) et le premier moyen de transmission thermique (34) sont agencés dans une unité extérieure (30) à l'extérieur d'un bâtiment (10) ou d'un véhicule, ou au niveau d'une limite extérieure (12) d'un bâtiment (10) ou d'un véhicule, et un étranglement (42) respectif et un second moyen de transmission thermique associé (44) sont agencés dans une unité intérieure (40).

3. Installation de climatisation (20) selon l'une des revendications précédentes, comprenant en outre un capteur de température (49) dans le circuit du fluide caloporteur (91, 92).

4. Installation de climatisation (20) selon l'une des revendications précédentes, dans laquelle il n'est prévu aucun moyen de transmission thermique pour l'évacuation de la puissance de refroidissement ou de chauffage de l'agent réfrigérant vers un autre milieu que le fluide caloporteur.

5. Installation de climatisation (20) selon l'une des revendications précédentes, dans laquelle un étranglement (42) est susceptible d'être commandé.

6. Installation de climatisation (20) selon la revendication précédente, dans laquelle une unité intérieure (40) est reliée à l'unité extérieure (30) au moyen de trois conduites à fluide (71, 72, 73), et est réalisée pour soutirer de la chaleur au fluide caloporteur dans un mode de fonctionnement en refroidissement et pour apporter de la chaleur au fluide caloporteur dans un mode de fonctionnement en chauffage.

7. Installation de climatisation (20) selon l'une des revendications précédentes, dans laquelle un moteur à courant triphasé à vitesse de rotation réglable est prévu pour l'entraînement du compresseur (32).
